Europäisches Patentamt

European Patent Office

Office européen des brevets

(19)

(11) **EP 0 577 350 B1**

(12) **EUROPEAN PATENT SPECIFICATION**

(45) Date of publication and mention
of the grant of the patent:
**22.08.2001 Bulletin 2001/34**

(51) Int Cl.[7]: **H04N 7/26**

(21) Application number: **93304995.9**

(22) Date of filing: **25.06.1993**

(54) **A video signal coding and decoding apparatus with an adaptive edge enhancement filter**

Vorrichtung zur Kodierung und Dekodierung von Bildsignalen mit adaptivem Filter zur Randverhaltensverbesserung

Appareil de codage et décodage de signaux vidéo avec un filtre adaptif pour l'amélioration des bords

(84) Designated Contracting States:
**DE FR GB**

(30) Priority: **02.07.1992 JP 17519892**

(43) Date of publication of application:
**05.01.1994 Bulletin 1994/01**

(73) Proprietor: **MATSUSHITA ELECTRIC INDUSTRIAL CO., LTD.**
**Kadoma-shi, Osaka-fu 571 (JP)**

(72) Inventors:
• **Chong, Siew Tan**
**Singapore 1954 (SG)**
• **Shen, Sheng Mei**
**Singapore 2264 (SG)**

(74) Representative: **Crawford, Andrew Birkby et al**
**A.A. Thornton & Co.**
**235 High Holborn**
**London WC1V 7LE (GB)**

(56) References cited:
**JP-A- 3 167 962**

• **PATENT ABSTRACTS OF JAPAN vol. 15, no. 387 (E-1117) 30 September 1991 & JP-A-03 155 280 (FUJITSU LTD.) 3 July 1991 & US-A-5 146 326 (HASEGAWA) 8 September 1992**
• **IEEE ACOUSTICS, SPEECH, AND SIGNAL PROCESSING MAGAZINE, vol.34, no.5, October 1986, NEW YORK US pages 1258 - 1268 RAMAMURTHI ET AL. 'Nonlinear Space-Variant Postprocessing of Block Coded Images'**
• **COMPUTER VISION GRAPHICS AND IMAGE PROCESSING, vol.24, no.2, November 1983, DULUTH, MA US pages 255 - 269 J.S.LEE 'Digital Image Smoothing and the Sigma Filter'**
• **IEEE 1983 MEDITERRANEAN ELECTROTECHNICAL CONFERENCE, vol.2, 24 May 1983, IEEE, NEW YORK, US; pages C2.12.1 - C2.12.2 V.CAPPELLINI 'Some non-linear digital filters for fast noisy-image processing'**
• **A.ROSENFELD, A.C.KAK 'Digital Picture Processing' 1982 , 2ND. EDITION, VOL. 1, ACADEMIC PRESS , NEW YORK, US; * Section 6.4.3: 'Selective and Weighted Averaging' on pages 255-261 ***
• **ICC'92 - INT. CONF. ON COMMUNICATIONS '92, vol.3, 14 June 1992, IEEE, NEW YORK, US; pages 1605 - 1608 A.RAO ET AL. 'A vector quantization-based coding scheme for television transmission via satellite'**

EP 0 577 350 B1

**Description**

This invention relates to an apparatus for bit rate reduction coding of video signal for digital storage or transmission and an apparatus for decoding video signal coded bit stream.

Discrete Cosine Transform (DCT) is very popularly used for the video compression of digital color video signal. It is also the adopted basic transformation by the ISO/WG11 MPEG Moving Picture Expert Group) for recommendation to the International Standardization Organization (ISO) for coded representation of moving picture information at around 1.15 Mbits/s data rate, which is called MPEG-1 Standard. In this proposed standard, a hybrid method comprising motion compensation techniques (DPCM) and DCT coding method is used. The method comprises the partitioning of the digitized input video sequence into pixel blocks. the discrete cosine transformation of the motion or non-motion compensated pixel blocks, quantization of the DCT coefficients based on quantization matrices and a rate-controller, zig-zag seanning and run-length encoding of the quantized DCT coefficients, and variable length coding of the run-level of the quantized DCT coefficients. The method proposed by MPEG is disclosed in the document "MPEG Video Simulation Model Three (SM3)", ISO-IEC/JTC1/SC2/WG11, MPEG 90/041, July 1990.

The basic coding method of SM3 can be applied to various input video format, and adapted to code at different data rate.

The idea behind transform coding is to make use of the energy compaction property of the transformation to decorrelate the image pixel so that redundancy can be removed more efficiently in the transformed domain. In digital image data, neighboring pixels are in general highly correlated which enable DCT, which has been shown to process superior energy compaction property to transform image pixels into transformed coefficients that are energy concentrated in only a few of the coefficients around the top-left corner (in the case of two dimensional DCT) of the transformed block

The energy compaction property of DCT can be easily applied in block of pixels that are highly correlated. However, in case of an edge block, i.e. a block which contains parts of prominent edges with sharp change in intensity, the compaction of signal energy cannot be done efficiently.

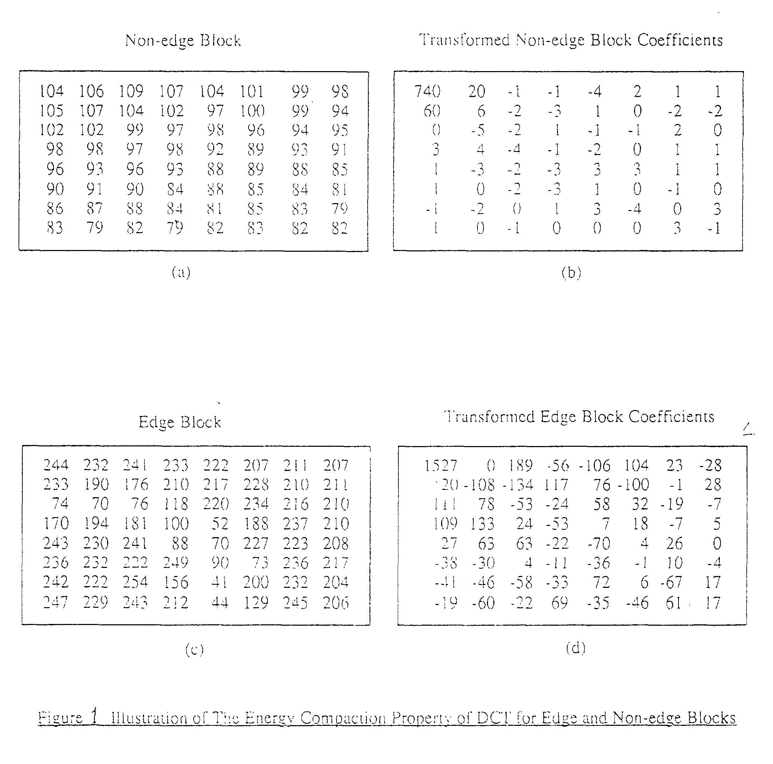

Fig. I illustrates the efficiency of DCT in transforming two blocks of pixel data, one contains non-edge and the other contains edge extracted from an image sequence and transformed by DCT. In Fig. 1, (a) shows non-edge block data before DCT, (b) shows DCT coefficients of the block of (a), (c) shows edge block data before DCT, and (d) shows DCT coefficients of the block of (c).

It can be seen from Fig. 1 that for the non-edge block, the transformed coefficients are energy concentrated at the upper left corner of the block. whereas for the edge block, the transformed coefficient AC signal energy is randomly distributed. Such transformed coefficients are more difficult to be quantized and run-length coded. As quantization matrix is designed to preserve the coefficients at upper left corner of the block (or the low frequency components), this will cause more errors to be generated for the edge block and result in a ringing effect (corona effect) around the reconstructed edge.

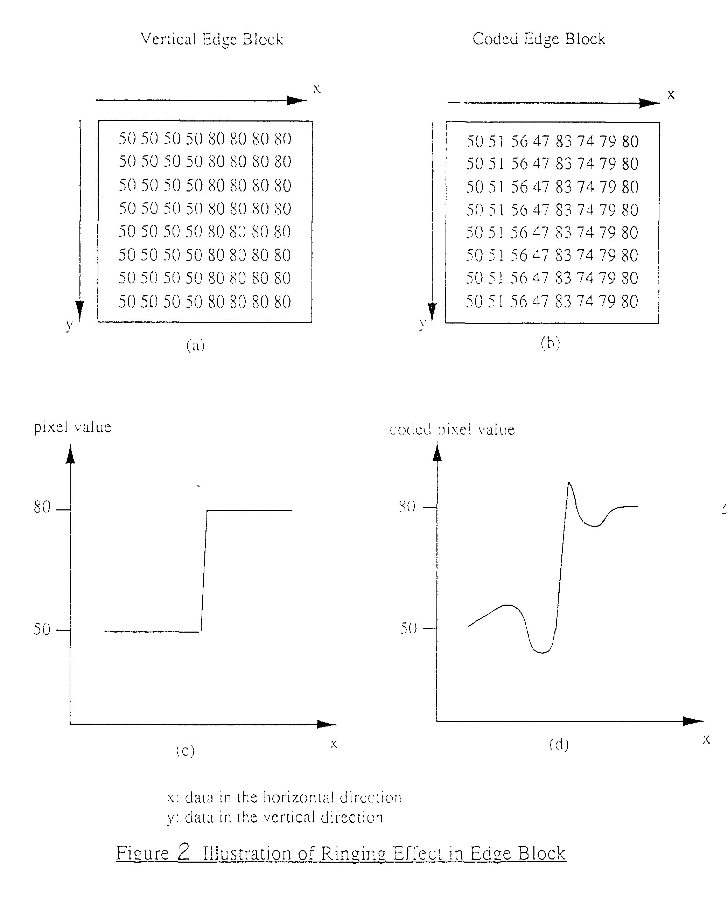

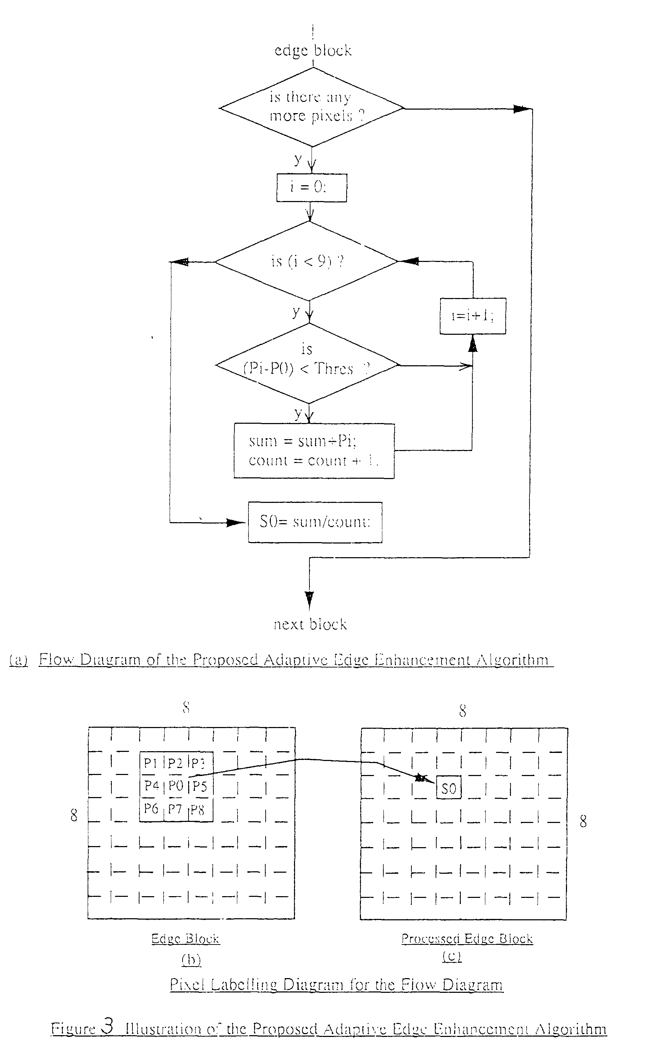

Fig. 2 aims to illustrate the ringing effect more clearly. In Fig. 2, (a) shows edge block data with vertical edge, (b) shows a block of (a) after coding and decoding process, (c) shows a graph of (a) with only horizontal direction, and (d) shows a graph of (b) with only horizontal direction, in which x represents the data in the horizontal direction and y represents the data in the vertical direction. In Fig. 3, an ideal vertical edge block shown on the left ((a) and (c)) is transformed by DCT, quantized using the SM3 quantizer, inverse quantized and subjected to inverse DCT. The resultant block is given on the right side ((b) and (d)). It can be seen that ripples appear on both side of the edge constituting the ringing effects.

As edge information is very sensitive to the human eyes compared to other high frequency pixel region, the distortion around the edge represents a source of clearly visible error.

JP-A-3155280 discloses a coded picture information decoding apparatus having an aliasing distortion occurrence prediction unit which detects blocks which cause aliasing distortion. An image processing unit smooths the detected blocks. In this arrangement the blocks are detected simply on the basis of the activity in detected blocks being greater than a predetermined threshold.

An object of the invention is lo reduce the ringing effect caused at the edge of the decoded image.

A coding apparatus comprises a block former for dividing an input digital video signal into blocks of pixel data, a transformer for transforming each block of pixel data by DCT to obtain DCT coefficients, a quantizer for quantizing the DCT coefficients to obtain quantized data, and encoder for encoding the quantized data to obtain a coded bit stream. During the coding process, a ringing distortion would appear around edges of an image, as the coding process of DCT is unable to handle edges efficiently.

The present invention provides a video signal decoding apparatus for decoding coded bit stream produced by compressing a video signal through a discrete cosine transform, quantizing and variable length coding, said apparatus comprising:

decoding means for decoding the coded bit stream to obtain reconstructed quantized data;
an inverse quantizer for inverse quantizing the reconstructed quantized data to obtain reconstructed discrete cosine transform coefficients;
an inverse transformer for inverse transforming the reconstructed discrete cosine transform coefficients to obtain reconstructed blocks of pixel data; an edge detector for performing detection of edge blocks forming edges of an image from the reconstructed blocks of pixel data, said edge detector comparing an activity of each of the reconstructed blocks with a predetermined first threshold, and producing an edge detection signal upon each detection of an edge block; and

a smoothing filter means responsive to the edge detection signal for smoothing the pixel data in the edge blocks to reduce a ringing distortion caused around each edge block due to the discrete cosine transform,

characterized in that said edge detector determines a block as the edge block if the activity of said block is greater than said predetermined first threshold and the activity of any one of blocks surrounding said block is lower than a predetermined second threshold.

The invention also provides a video signal processing system comprising:

a coding apparatus which comprises:

a block former for dividing an input digital video signal into blocks of pixel data;

a discrete cosine transformer for subjecting each block of pixel data to a discrete cosine transform to obtain discrete cosine transform coefficients;

a quantizer for quantizing the discrete cosine transform coefficients to obtain quantized data; and

encoding means for encoding the quantized data to obtain a coded bit stream; and

a decoding apparatus as set out above.

The ringing effect in the coded edge block is found to be made up of pixel values that are in the form of ripple. The magnitude of this ripple is reduced by performing a smoothing function around the edge at the decoded picture, thereby reducing the ringing effect. The smoothing function proposed is able to selectively remove ringing distortion in coded edge block.

The basic idea of the present invention is to first determine a block where ringing distortion occurs due to the above coding process, by detecting a contrasting edge block in each decoded picture frame and then perform smoothing function on the detected edge block. The smoothing function is done using an averaging method that adaptively selects only neighboring pixel from the same side of the edge for the averaging process. A thresholding technique to compare the value of pixel to be smoothed and its neighboring pixel is used for the adaptive selection of pixel.

Fig. 1 illustrates the energy compaction of DCT with respect to edge and non-edge blocks.

Fig. 2 illustrates the ringing effects in the decoded edge block.

Fig. 3(a) shows a flow diagram of an adaptive edge enhancement algorithm used in the invention, Fig. 3(b) is an assumed 8 x 8 edge block, and Fig. 3(c) is a block of (b) after smoothed.

Fig. 4 shows a block diagram of an encoder apparatus used in an embodiment of the invention.

Fig. 5 shows a block diagram of a decoder apparatus in an embodiment of the invention.

Fig. 6 illustrates the reduction of ringing effect in edge block after the post-process.

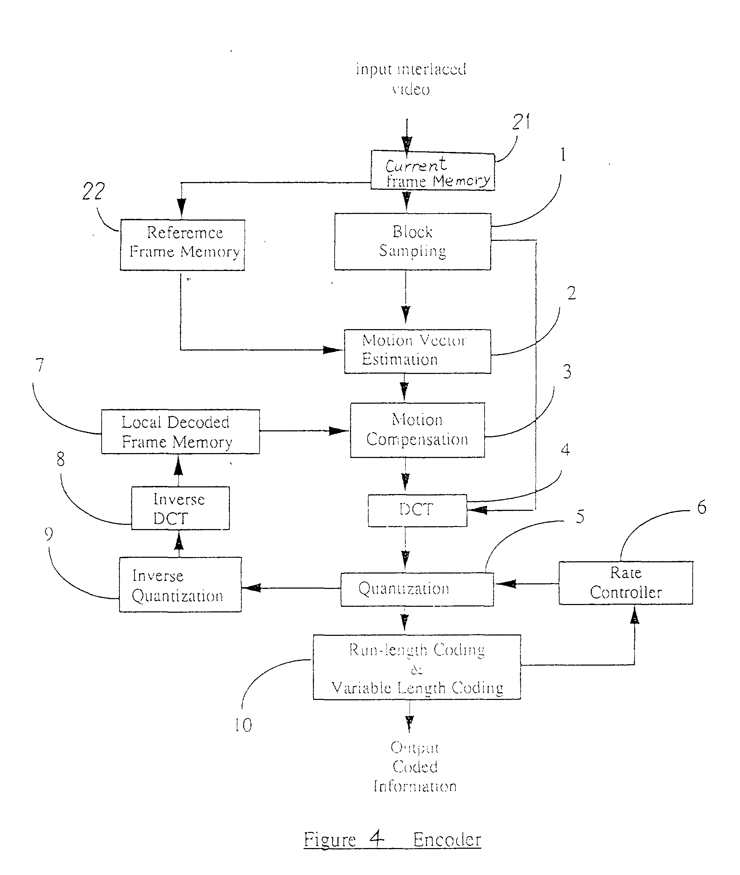

Fig. 4 shows a block diagram of an encoder apparatus used in an embodiment of the invention. An input frame of a digitized video signal is stored in a current frame memory 21. The frame data are divided into spatially non-overlapping blocks of pixel data in a block sampling circuit 1. To provide a reasonable level of adaptiveness, a block size of 8 x 8 pixels may be used. The frame data stored in the frame memory 21 are further sent to and stored in a reference frame memory 22 for later use for motion estimation. A motion vector of each block in the current frame is estimated in a motion vector estimation circuit 2 using a corresponding block in the previous frame stored in the frame memory 22. A motion compensation circuit 3 compensate for the motion of the current block at need by using, as a reference, previously local decoded frame data stored in a local decoded frame memory 7. The pixel data in the motion compensated block are subjected to discrete cosine transform (DCT) in a discrete cosine transforming (DCT) circuit 4 to be transformed to DCT coefficients. The DCT coefficients are then quantized by a quantization circuit 5 using quantizer matrix and quantizer step size given by a rate controller 6 into quantized data. The quantized data are subjected to run-length coding and variable length coding and multiplexed by a run-length coding & variable length coding circuit 10 to be an output coded bit stream. The rate controller 6 controls the quantizer step size according to the data quantity of the coded bit stream. The output quantized data of the quantization circuit 5 are also inverse quantized by an inverse quantization circuit 9, and inverse transformed by an inverse discrete cosine transforming (inverse DCT) circuit 8 to obtain a local decoded frame data which are stored in the local decoded frame memory 7 for use for motion compensation of the subsequent frame. Detailed explanation of the encoder apparatus shown in Fig. 4 is found in the document "MPEG Video Simulation Model Three (SM3), "ISO-IEC/JTC1/SC2/WG11, MPEG 90/041, July 1990.

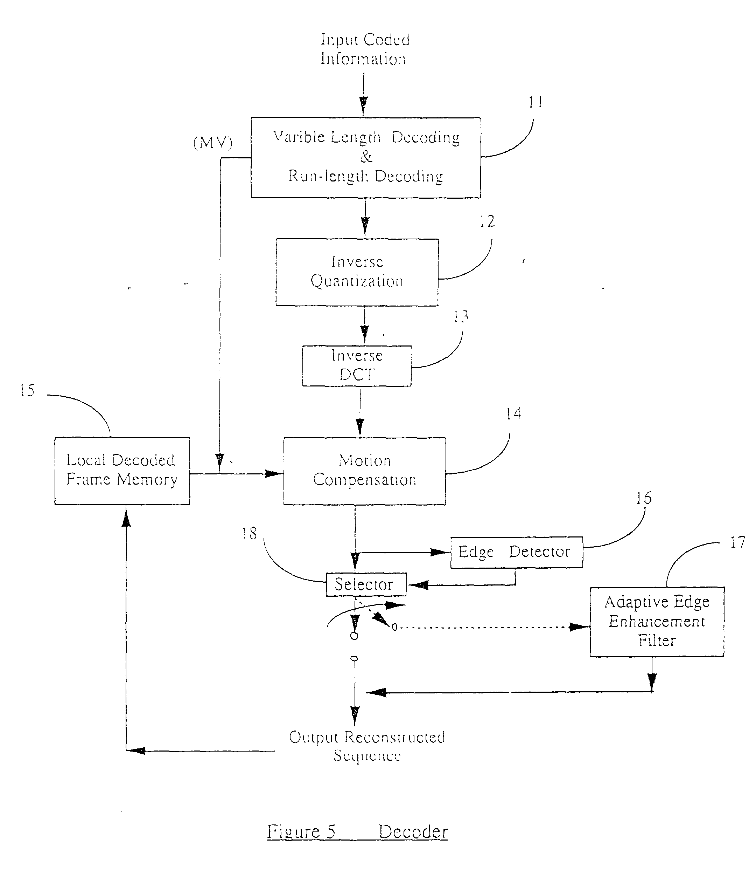

Fig. 5 shows a block diagram of a decoder apparatus embodying the invention for decoding the coded bit stream from the encoder apparatus shown in Fig. 4. An input bit stream is inputted to a variable length decoding & run-length decoding circuit 11 which demultiplexes and decodes the variable length encoded run-length codes to reconstructed quantized coefficients of each block of each coded frame. The reconstructed quantized coefficients of each block is then subjected to an inverse quantization process in an inverse quantization circuit 12 to become reconstructed DCT coefficients. The reconstructed DCT coefficients are subjected to inverse discrete cosine transformation process in an inverse discrete cosine transformation (inverse DCT) circuit 13 to become reconstructed block of pixel data. The reconstructed block, if it has been motion compensated. is subjected to inverse motion compensation in a motion compensation circuit 14 using a motion vector included in the decoded data and a reference frame stored in a local decoded frame memory 15.

The reconstructed decoded block, after motion compensation, is then passed to an edge detection circuit 16. The edge detection circuit 16 examines the reconstructed decoded block to see if the block is an edge block or not, and upon detection of an edge block outputs an edge detection signal indicating that the decoded block is an edge block A selector 18, which normally passes the decoded blocks as output reconstructed picture, is responsive to the edge detection signal for switching to pass the decoded block detected as an edge block to an adaptive edge enhancement filter 17. The filter 17 processes the edge block by an adaptive smoothing function to reduce the ringing effect associated with the edge block.

Detailed explanation of the components of the decoder apparatus shown in Fig. 5 excluding the edge detector 16 and the adaptive edge enhancement filter 17 is found in the document "MPEG Video Simulation Model Three (SM3), "ISO-IEC/JTC1/SC2/WG 11, MPEG 90/041, July 1990.

The edge detector 16 performs an edge detection method based on checking the activity of the processed block and its surrounding blocks with comparison to two pre-defined thresholds. Here, The block activity is represented by the sum of the square deviation of the block pixel intensity values from a mean block intensity value. When the calculated activity of the processed block is greater than a first threshold (here, we chose 5300), and when any one of the activities of the surrounding blocks is lower than a second threshold (here we chose 1000), then the processed block is classified as an edge block.

The adaptive edge enhancement filter 17 will now be described in detail. Fig. 3 (a) is a flow diagram showing an adaptive edge enhancement algorithm used in the filter 17, and Figs. 3(b) and (c) show pixel labeling diagram for the flow diagram, in which Pi (i = 1, 2, 3..... 8) is any pixel around the pixel of P0 and S0 is the smoothed result of P0. If an edge block is found, which is composed of 8 x 8 pixel data, then for every pixel data in the 8 x 8 edge block, we get their smoothed data by averaging eight data around one pixel, if all these eight data belong to the same side as that processed pixel.

For example, P0 in Fig. 4(b) is the value of a pixel in a 8 x 8 edge block, and we first check whether the difference (Pi-P0) (Pi is P1, P2, P3,.... or P8). is smaller than a threshold, as shown in the flow diagram in Fig. 4(a). The threshold is determined by experiments, and here we chose 20 for video signal.

In this process, if there is a pixel, say P3, with (P3-P0) > the threshold, we excluded it, i.e., we use only P1, P2, P4, P5, P6, P7, P8 to average for getting the smoothed value for the pixel of P0, that is to say:

$$\text{let } S0 = (P1+P2+P4+P5+P6+P7+P8)/7;$$

then the pixel value at position P0 is now replaced by S0, a smoothed data.

In other words, the adaptive edge enhancement filter 17 performs convolution on a pixel by pixel basis on the decoded edge block with an adaptive averaging filter mask, subjecting every neighboring pixel of the pixel to be convoluted with a threshold test to determine if the neighboring pixel belongs to the same side of the picture edge as the pixel to be convoluted. If the neighboring pixel belongs to the same side of the edge as the pixel to be convoluted, it is included in the averaging process, and otherwise it is excluded from the averaging process.

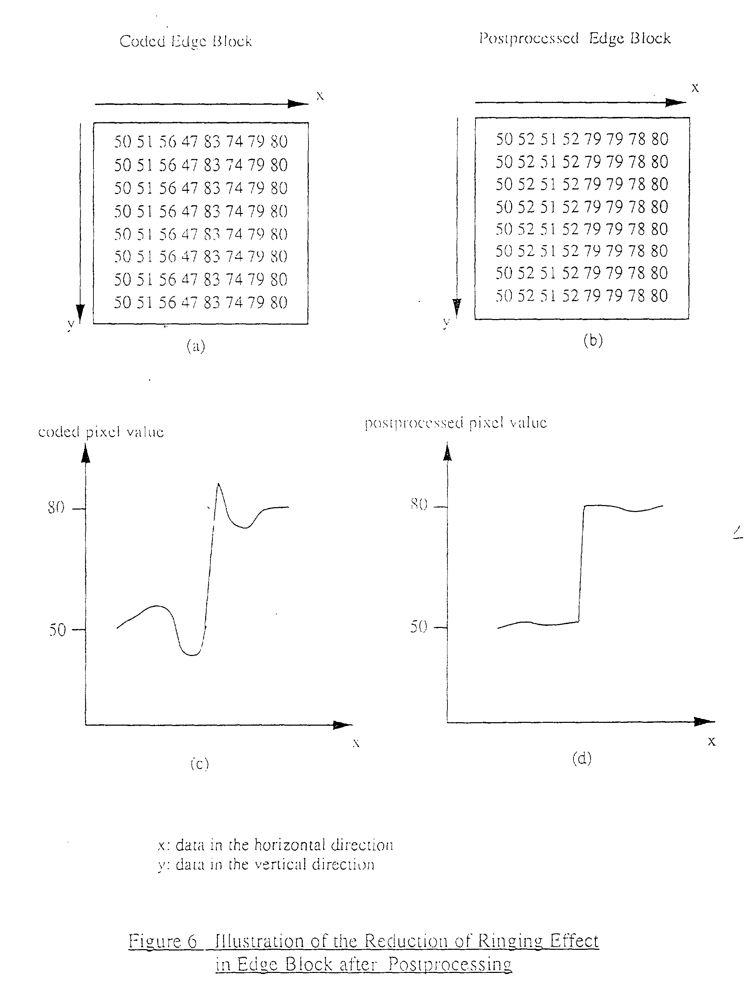

By processing every pixel data of 8 x 8 pixel data in an edge block in the same way as the way P0 is processed, an adaptive edge enhancement filter is realized. So it is very simple to implement, and it is also very effective to remove ringing distortion around an edge block. This can be seen from Fig. 6, in which (a) shows an edge block after coding and decoding process, (b) shows a smoothed block for the block of (a), (c) shows a graph for illustrating the block of (a) with horizontal data, and (d) shows a graph for illustrating the block of (b) with horizontal data. An edge block shown in Fig. 2(a), after coding and decoding process, will become the block with ringing distortion shown in Fig. 6 (a). After using the smoothing filter, the block shown in Figs. 6(b) and 6(d) can be obtained. It can be seen that data in Fig. 6(b) has been smoothed, and therefore ripples around the cross section in Fig. 6(c) has been removed.

By performing the smoothing function on the detected edge blocks, the ringing effects (corona effects) can been reduced significantly. The subjective quality of the coded video sequences, after the postprocessing filter, has shown improvement compared to those without using the postprocessing filter.

With reference to the MPEG coding standard, performing the smoothing function on the coded picture means that no extra information needs to be transmitted by the encoder apparatus to the decoder apparatus and hence no change in the bit-syntax is needed.

Thus, the effects of applying this method is that corona noise around the edge is reduced significantly, no further information to be transmitted to the decoder, and also no change to the existing MPEG coding standard is required. By doing simple averaging operation to process the edge block, hardware implementation of the method is also very simple.

## Claims

1. A video signal decoding apparatus for decoding coded bit stream produced by compressing a video signal through a discrete cosine transform, quantizing and variable length coding, said apparatus comprising:

   decoding means (11) for decoding the coded bit stream to obtain reconstructed quantized data;
   an inverse quantizer (12) for inverse quantizing the reconstructed quantized data to obtain reconstructed discrete cosine transform coefficients;
   an inverse transformer (13) for inverse transforming the reconstructed discrete cosine transform coefficients to obtain reconstructed blocks of pixel data;
   an edge detector (16) for perfomfing detection of edge blocks forming edges of an image from the reconstructed blocks of pixel data, said edge detector comparing an activity of each of the reconstructed blocks with a predetermined first threshold, and producing an edge detection signal upon each detection of an edge block; and
   a smoothing filter means (17) responsive to the edge detection signal for smoothing the pixel data in the edge blocks to reduce a ringing distortion caused around each edge block due to the discrete cosine transform,

   characterized in that said edge detector (16) determines a block as the edge block if the activity of said block is greater than said predetermined first threshold and the activity of any one of blocks surrounding said block is lower than a predetermined second threshold.

2. An apparatus according to claim 1, wherein said smoothing filter comprises:

   means for performing convolution on a pixel by pixel basis on the edge block with an adaptive averaging filter mask;
   means for subjecting every neighboring pixel of a pixel to be convoluted with a threshold test to determine if said neighboring pixel belongs to the same side of the edge of an image as said pixel to be convoluted; and
   means for including in an averaging process neighboring pixels belonging to the same side of the edge of the image as said pixel to be convoluted, and excluding the remaining neighboring pixels not belonging to the same side of the edge of the image from the averaging process.

3. A video signal processing system comprising:
   a coding apparatus which comprises:

   a block former (1) for dividing an input digital video signal into blocks of pixel data;
   a discrete cosine transformer (4) for subjecting each block of pixel data to a discrete cosine transform to obtain discrete cosine transform coefficients;
   a quantizer (5) for quantizing the discrete cosine transform coefficients to obtain quantized data; and
   encoding means for encoding the quantized data to obtain a coded bit stream; and
   a decoding apparatus according to claim 1 or 2.

## Patentansprüche

1. Videosignal-Decodiervorrichtung zum Decodieren einer codierten Bit-Folge, erzeugt durch Komprimieren eines Videosignals über eine diskrete Cosinus-Transformation, Quantisierung und eine variable Längencodierung, wobei die Vorrichtung aufweist:

   eine Decodiereinrichtung (11) zum Decodieren der codierten Bit-Folge, um rekonstruierte, quantisierte Daten zu erhalten;
   einen inversen Quantisierer (12) für eine inverse Quantisierung der rekonstruierten, quantisierten Daten, um rekonstruierte, diskrete Cosinus-Transformationskoeffizienten zu erhalten;
   einen inversen Transformer (13) für ein inverses Transformieren der rekonstruierten, diskreten Cosinus-Transformationskoeffizienten, um rekonstruierte Blöcke aus Pixel-Daten zu erhalten;
   einen Kantendetektor (16) zum Durchführen einer Erfassung von Kantenblöcken, die Kanten eines Bilds bilden, von den rekonstruierten Blöcken von Pixel-Daten, wobei der Kantendetektor eine Aktivität jedes der rekonstruierten Blöcke mit einem vorbestimmten, ersten Schwellwert vergleicht, und Erzeugen eines Kantenerfassungssignals bei jeder Erfassung eines Kantenblocks; und
   eine Glättungsfiltereinrichtung (17), die auf das Kantenerfassungssignal zum Glätten der Pixel-Daten in den Kantenblöcken anspricht, um eine Rufverzerrung, verursacht um jeden Kantenblock herum, aufgrund der diskreten Cosinus-Transformation, zu reduzieren, dadurch gekennzeichnet, daß der Kantendetektor (16) einen Block als den Kantenblock bestimmt, wenn die Aktivität des Blocks größer als der vorbestimmte, erste Schwellwert ist, und die Aktivität irgendeines der Blökke, die den Block umgeben, niedriger als ein vorbestimmter, zweiter Schwellwert ist.

2. Vorrichtung nach Anspruch 1, wobei der Glättungsfilter aufweist:

eine Einrichtung zum Durchführen einer Konvolution bzw. Faltungsoperation auf einer Basis Pixel für Pixel an dem Kantenblock mit einer adaptiven, mittelnden Filtermaskierung; eine Einrichtung zum Unterwerfen jedes Nachbar-Pixels eines Pixels, das einer Faltungsoperation unterworfen werden soll, mit einem Schwellwerttest, um zu bestimmen, ob das Nachbar-Pixel zu derselben Seite der Kante eines Bilds wie das Pixel, das einer Faltungsoperation unterworfen werden soll, gehört; und
eine Einrichtung zum Einschließen in einen mittelnden Prozeß von Nachbar-Pixeln, die zu derselben Seite der Kante des Bilds gehören, wie das Pixel, das einer Faltungsoperation unterworfen werden soll, und Ausschließen der verbleibenden Nachbar-Pixel, die nicht zu derselben Seite der Kante des Bilds gehören, von dem mittelnden Prozeß.

3. Videosignalverarbeitungssystem, das aufweist:
eine Codiervorrichtung, die aufweist:

einen Block-Former (1) zum Unterteilen eines Eingangs-Digital-Videosignals in Blöcke von Pixel-Daten,
einen diskreten Cosinus-Transformer (4) zum Unterwerfen jedes Blocks von Pixel-Daten einer diskreten Cosinus-Transformation, um diskrete Cosinus-Transformationskoeffizienten zu erhalten;
einen Quantisierer (5) zum Quantisieren der diskreten Cosinus-Tranaformationskoeffizienten, um quantisierte Daten zu erhalten; und
eine Codiereinrichtung zum Codieren der quantisierten Daten, um eine codierte Bit-Folge zu erhalten; und
eine Decodiervorrichtung nach Anspruch 1 oder 2.

## Revendications

1. Appareil de décodage de signal vidéo permettant de décoder un train de bits codé qui est produit par compression d'un signal vidéo via une transformation par cosinus discrets, quantification et codage en longueur variable, ledit appareil comprenant :

un moyen de décodage (11) servant à décoder le train de bits codé de façon à obtenir des données quantifiées reconstruites ;
un quantificateur inverse (12) servant à quantifier, de manière inverse, les données quantifiées reconstruites afin d'obtenir des coefficients reconstruits de transformation par cosinus discrets ;
un transformateur inverse (13) servant à transformer, de façon inverse, les coefficients reconstruits de transformation par cosinus discret afin d'obtenir des blocs reconstruits de données de pixels ;
un détecteur de bord (16) servant à effectuer une détection des blocs de bords formant les bords d'une image à partir des blocs reconstruits de données de pixels, ledit détecteur de bord comparant l'activité de chacun des blocs reconstruits avec un premier seuil predéterminé et produisant un signal de détection de bord à chaque détection d'un bloc de bord ; et
un moyen (17) formant un filtre de lissage qui répond au signal de détection de bord en lissant les données dé pixels se trouvant dans les blocs de bords afin de réduire une distorsion d'ondulation provoquée autour de chaque bloc de bord du fait de la transformation par cosinus discrets,

caractérisé en ce que ledit détecteur de bord (16) détermine qu'un bloc est un bloc de bord si l'activité dudit bloc est plus grande que ledit premier seuil prédéterminé et que l'activité de tout bloc entourant ledit bloc est inférieure à un deuxième seuil prédéterminé.

2. Appareil selon la revendication 1, où ledit filtre de lissage comprend :

un moyen servant à effectuer une convolution, pixel par pixel, sur le bloc de bord au moyen d'un masque formant un filtre de prise de moyenne adaptatif ;
un moyen servant à soumettre tout pixel voisin d'un pixel devant subir la convolution à'un essai de seuil afin de déterminer si ledit pixel voisin appartient au même côté du bord d'une image que ledit pixel devant subir la convolution ; et
un moyen servant à inclure, dans un processus de prise de moyenne, des pixels voisins appartenant au même côté du bord de l'image que ledit pixel devant subir la convolution, et à exclure; du processus de prise de moyenne, les pixels voisins restants n'appartenant pas au même côté du bord de l'image.

3. Système de traitement de signal vidéo, comprenant :

un appareil de codage qui comprend :

un moyen (1) de formation de blocs servant à diviser un signal vidéo numérique d'entrée en blocs de données de pixels ;

un moyen (4) de transformation par cosinus discrets servant à soumettre chaque bloc de données de pixels à une transformation par cosinus discrets afin d'obtenir des coefficients de transformation par cosinus discrets ;

un moyen de quantification (5) servant à quantifier les coeffcients de transformation par cosinus discrets afin d'obtenir des données quantifiées ; et

un moyen de codage servant à coder les données quantifiées afin d'obtenir un train de bits codé ; et

un appareil de décodage selon la revendication 1 ou 2.

Non-edge Block

| | | | | | | | |
|---|---|---|---|---|---|---|---|
| 104 | 106 | 109 | 107 | 104 | 101 | 99 | 98 |
| 105 | 107 | 104 | 102 | 97 | 100 | 99 | 94 |
| 102 | 102 | 99 | 97 | 98 | 96 | 94 | 95 |
| 98 | 98 | 97 | 98 | 92 | 89 | 93 | 91 |
| 96 | 93 | 96 | 93 | 88 | 89 | 88 | 85 |
| 90 | 91 | 90 | 84 | 88 | 85 | 84 | 81 |
| 86 | 87 | 88 | 84 | 81 | 85 | 83 | 79 |
| 83 | 79 | 82 | 79 | 82 | 83 | 82 | 82 |

(a)

Transformed Non-edge Block Coefficients

| | | | | | | | |
|---|---|---|---|---|---|---|---|
| 740 | 20 | -1 | -1 | -4 | 2 | 1 | 1 |
| 60 | 6 | -2 | -3 | 1 | 0 | -2 | -2 |
| 0 | -5 | -2 | 1 | -1 | -1 | 2 | 0 |
| 3 | 4 | -4 | -1 | -2 | 0 | 1 | 1 |
| 1 | -3 | -2 | -3 | 3 | 3 | 1 | 1 |
| 1 | 0 | -2 | -3 | 1 | 0 | -1 | 0 |
| -1 | -2 | 0 | 1 | 3 | -4 | 0 | 3 |
| 1 | 0 | -1 | 0 | 0 | 0 | 3 | -1 |

(b)

Edge Block

| | | | | | | | |
|---|---|---|---|---|---|---|---|
| 244 | 232 | 241 | 233 | 222 | 207 | 211 | 207 |
| 233 | 190 | 176 | 210 | 217 | 228 | 210 | 211 |
| 74 | 70 | 76 | 118 | 220 | 234 | 216 | 210 |
| 170 | 194 | 181 | 100 | 52 | 188 | 237 | 210 |
| 243 | 230 | 241 | 88 | 70 | 227 | 223 | 208 |
| 236 | 232 | 222 | 249 | 90 | 73 | 236 | 217 |
| 242 | 222 | 254 | 156 | 41 | 200 | 232 | 204 |
| 247 | 229 | 243 | 212 | 44 | 129 | 245 | 206 |

(c)

Transformed Edge Block Coefficients

| | | | | | | | |
|---|---|---|---|---|---|---|---|
| 1527 | 0 | 189 | -56 | -106 | 104 | 23 | -28 |
| 20 | -108 | -134 | 117 | 76 | -100 | -1 | 28 |
| 111 | 78 | -53 | -24 | 58 | 32 | -19 | -7 |
| 109 | 133 | 24 | -53 | 7 | 18 | -7 | 5 |
| 27 | 63 | 63 | -22 | -70 | 4 | 26 | 0 |
| -38 | -30 | 4 | -11 | -36 | -1 | 10 | -4 |
| -41 | -46 | -58 | -33 | 72 | 6 | -67 | 17 |
| -19 | -60 | -22 | 69 | -35 | -46 | 61 | 17 |

(d)

Figure 1   Illustration of The Energy Compaction Property of DCT for Edge and Non-edge Blocks

Vertical Edge Block

Coded Edge Block

x

x

```
50 50 50 50 80 80 80 80
50 50 50 50 80 80 80 80
50 50 50 50 80 80 80 80
50 50 50 50 80 80 80 80
50 50 50 50 80 80 80 80
50 50 50 50 80 80 80 80
50 50 50 50 80 80 80 80
50 50 50 50 80 80 80 80
```

```
50 51 56 47 83 74 79 80
50 51 56 47 83 74 79 80
50 51 56 47 83 74 79 80
50 51 56 47 83 74 79 80
50 51 56 47 83 74 79 80
50 51 56 47 83 74 79 80
50 51 56 47 83 74 79 80
50 51 56 47 83 74 79 80
```

y

y

(a)

(b)

pixel value

coded pixel value

80

80

50

50

x

x

(c)

(d)

x: data in the horizontal direction
y: data in the vertical direction

Figure 2  Illustration of Ringing Effect in Edge Block

edge block

is there any more pixels ?

y

$i = 0;$

is $(i < 9)$ ?

y

is $(Pi-P0) < Thres$ ?

$i=i+1;$

y

$sum = sum+Pi;$
$count = count + 1;$

$S0= sum/count;$

next block

(a)  Flow Diagram of the Proposed Adaptive Edge Enhancement Algorithm

8                                    8

| P1 | P2 | P3 |
| P4 | P0 | P5 |
| P6 | P7 | P8 |

S0

8          8          8          8

Edge Block                    Processed Edge Block
(b)                               (c)
Pixel Labelling Diagram for the Flow Diagram

Figure 3  Illustration of the Proposed Adaptive Edge Enhancement Algorithm

input interlaced
video

Figure 4   Encoder

Input Coded
Information

(MV)

Varible Length  Decoding
&
Run-length Decoding

11

Inverse
Quantization

12

Inverse
DCT

13

15

Local Decoded
Frame Memory

Motion
Compensation

14

18

Edge    Detector

16

Selector

17

Adaptive Edge
Enhancement
Filter

Output Reconstructed
Sequence

Figure 5    Decoder

Coded Edge Block

Postprocessed Edge Block

x

```
50 51 56 47 83 74 79 80
50 51 56 47 83 74 79 80
50 51 56 47 83 74 79 80
50 51 56 47 83 74 79 80
50 51 56 47 83 74 79 80
50 51 56 47 83 74 79 80
50 51 56 47 83 74 79 80
50 51 56 47 83 74 79 80
```

y

(a)

x

```
50 52 51 52 79 79 78 80
50 52 51 52 79 79 78 80
50 52 51 52 79 79 78 80
50 52 51 52 79 79 78 80
50 52 51 52 79 79 78 80
50 52 51 52 79 79 78 80
50 52 51 52 79 79 78 80
50 52 51 52 79 79 78 80
```

y

(b)

coded pixel value

postprocessed pixel value

80

50

X

(c)

80

50

x

(d)

x: data in the horizontal direction
y: data in the vertical direction

Figure 6   Illustration of the Reduction of Ringing Effect
in Edge Block after  Postprocessing